# EUROPEAN PATENT APPLICATION

(11) **EP 4 283 592 A1**
(43) Date of publication of application: **29.11.2023**
(21) Application number: 22175911.1
(22) Date of filing: 27.05.2022
(51) Int. Cl.: G08G 1/056, G08G 1/0967, G08G 1/16, H04W 4/46

(54) **METHOD FOR DETECTING DRIVING AGAINST A STATUTORY DIRECTION OF TRAVEL**

(71) Applicant: VOLKSWAGEN AG, 38440 Wolfsburg (DE)
(72) Inventor: Peters, Steffen, 14793 Buckautal (DE)

(57) **Abstract**

The invention relates to a method for detecting driving of a vehicle (10) against the statutory direction of travel, wherein the vehicle (10) communicates with further vehicles (14) by means of Car2X communication (12), wherein other road users, in particular the further vehicles (14), are informed by means of Car2X communication (12) when the vehicle (10) is moving against the statutory direction of travel.

In the method in which the disadvantages from the prior art are avoided, it is provided that other road users, in particular the further vehicles (14), are signaled when the vehicle (10) is no longer moving against the prescribed direction of travel.

## Description

The invention relates to a method for detecting the driving of a vehicle against the statutory direction of travel, wherein the vehicle communicates with further vehicles by means of Car2X communication, wherein other road users, in particular the further vehicles, are informed by means of Car2X communication when the vehicle moves against the prescribed direction of travel.

In addition, the invention relates to a vehicle, with at least one communication device for communicating with further vehicles by means of Car2X communication and with at least one navigation device.

In the prior art, various options are known for detecting that a vehicle is driving in the wrong direction. Most of these options are limited to detecting wrong-way driving from external sources, such as drivers of other vehicles or cameras installed on roadways.

DE 2008 046 875 B3 discloses a method for preventing driving against the prescribed direction of travel. For this purpose, a recognition device is provided in a vehicle that recognizes traffic signs. In addition, a navigation device is provided which checks whether driving in the wrong direction is taking place. If driving in the wrong direction is detected, the vehicle is prevented from continuing.

DE 10 205 213 517 A1 shows a method for warning other road users when a vehicle is driving the wrong way. For this purpose, it is envisaged that the wrong-way driving of a vehicle is detected via sensors or a navigation system. The information about a detected wrong-way trip is communicated to other road users via a communication link.

DE 10 2013 009 543 A1 discloses a method for identifying a wrong-way driver. A device automatically detects whether a vehicle is not moving in the statutory direction of travel. This information can be transmitted to other road users by means of Car2X communication.

A disadvantage of the aforementioned methods of detecting a wrong-way trip is that the wrong-way trip is not always reliably detected. In addition, other road users can often only be warned about a wrong-way driver with a long time delay. Furthermore, with the methods known from the prior art, no conclusions can be drawn as to how long a warning should remain in place so as not to warn other road users unnecessarily.

The invention is now based on the objective of specifying a method for detecting the driving of a vehicle against the prescribed direction of travel as well as a vehicle, in which the disadvantages from the prior art are avoided.

This objective is solved in the present invention by the features of the identification part of patent claim 1, first of all, in that other road users, in particular the other vehicles, are signaled when the vehicle is no longer moving against the statutory direction of travel.

The direction of travel is to be understood as the current orientation of the vehicle on the route. In addition, the distance traveled by the vehicle or other vehicles, especially on a road, can also be taken into account. The longitudinal movement on the road, but also the transverse movement of the vehicle on the road is taken into account. Consequently, the travel distance is not only the distance traveled on a road, for example, but also the lateral movement, i.e. the position of the vehicle in relation to the entire width of the road or the width of the road. In construction sites, for example, there are often lane narrowings, so that driving is only possible in a certain area of the entire theoretically available width of the lane.

Other vehicles are, in particular, other road users who are in the vicinity of the vehicle. Preferably, these are vehicles moving in the prescribed direction of travel in the lane occupied by the vehicle. However, it is also conceivable that other vehicles are part of the oncoming traffic, for example.

A first advantage of the invention is that detection of wrong-way driving and, in particular, of the corrected continuation of the vehicle's journey can be passed on to other road users, in particular to other vehicles, so that a prompt message can be sent without delay. In this way, safety in road traffic is significantly increased.

Further preferred embodiments of the invention result from the other features mentioned in the subclaims.

In a first embodiment of the method according to the invention, it is provided that signaling is realized by omission of the communication that the vehicle is moving against the statutory direction of travel. It is conceivable that the information about a wrong-way driver is transmitted permanently. The standard case is that all road users move in the correct driving direction. An additional message that there is no wrong-way driver on the road is therefore not absolutely necessary. If there is no message that a vehicle is not moving in the statutory direction of travel, it can be assumed that there is no wrong-way driver in this section of the road.

In a further advantageous embodiment of the method according to the invention, it is provided that information about the direction of travel of the respective further vehicles is transmitted to the vehicle by further vehicles communicating with the vehicle, at least in such a way that, when a predetermined number of direction of travel information items from further vehicles having the same relative direction of travel in comparison with the vehicle is reached, it is assumed that the vehicle is moving in the statutory direction of travel. If the vehicle is moving in the same direction as other vehicles in the vicinity, it is assumed that the vehicle is moving in the correct direction. Conversely, the driver can react if he is signaled to move in a different direction than the transmitted relative driving directions. The driver of the vehicle can be signaled these relative driving directions so that the driver can adjust the direction of the vehicle accordingly. For example, if he or she drives across a highway exit onto a highway and is signaled that cars on the highway are moving in the opposite direction relative to his direction of travel, the driver can react and immediately continue driving in the correct direction.

The direction of travel information can be the current direction of travel. However, it is also conceivable that an average driving direction of a predetermined past time and/or driving distance is transmitted. Also conceivable is the transmission of random information about the current direction of travel in a defined past time period or a past travel distance. In this way, the accuracy and in particular the reliability of the method can be increased. If only the current direction of travel is transmitted, this information could be interpreted incorrectly if, for example, the course of the route is winding, or an on-ramp and/or an exit fits into the course of a highway in such a way that the current direction information could lead to an interpretation that incorrectly assumes or excludes incorrect driving.

In addition, in a further embodiment of the method, it can be provided that when the direction of travel information is received from three further vehicles, preferably from five further vehicles, which have the same relative direction of travel compared to the vehicle, it is assumed that the vehicle is moving in the statutory direction of travel. In this way, a prompt detection can be made that the vehicle is again moving in the correct direction of travel, while at the same time a representative number of further vehicles can be registered. If the number of further vehicles to be registered is too large, the detection of travel in the correct direction of travel is delayed. If the number of further vehicles to be registered is too small, the probability is too great that the further vehicle will falsely emit signals indicating that the vehicle is moving in the statutory direction of travel.

In addition or alternatively, in a further advantageous embodiment of the method according to the invention, it can be provided that the vehicle comprises a navigation device, that it is assumed that the vehicle is moving in the opposite direction to the statutory direction of travel when it is detected by the navigation device that the vehicle is driving up an on-ramp of a federal road or a highway in the wrong direction of approach, and that it is assumed that the vehicle is moving in the prescribed direction of travel again when a deceleration of the vehicle and a subsequent change of direction of the vehicle by 180° are registered by the navigation device. If the vehicle is in the wrong direction on a highway exit, it is possible that the driver of the vehicle will turn the vehicle around and continue driving in the opposite direction because he has realized his mistake. When making a U-turn on an exit ramp, it can be assumed that the driver first slows the vehicle down to be able to initiate a 180° U-turn. When this happens, it can be assumed that the vehicle will subsequently continue to move in the correct direction of travel.

Thereby, in a further embodiment of the method, it can be provided that after the vehicle has accelerated to > 40 km/h after the 180° direction change, it is assumed that the vehicle will continue to move in the statutory direction of travel. If the speed after the turning maneuver is also used as an indicator, it can be ensured that an intentional change of direction by 180° has been made. A speed > 40 km/h is based on the speed limits in a highway exit. If the driver of the vehicle behaves according to the local regulations after the turning maneuver, it can be assumed that the wrong turn was actively detected and ended. In addition, it can be assumed that the vehicle has no damage or defect if it moves along after the turning maneuver approximately in accordance with the specified speed limits.

In a further embodiment of the method according to the invention, it is provided that it is assumed that the vehicle is no longer moving on the highway against the statutory direction of travel if the vehicle initially slows down and a change of direction by 180° is registered. If the vehicle is already on a highway or state road and is traveling in the wrong direction, it is possible that the driver of the vehicle will turn the vehicle around and continue traveling in the opposite direction. With an appropriate guideline speed on a state highway or freeway, it can be assumed that the driver will slow the vehicle down first to be able to initiate a 180° turning maneuver. When this happens, it can be assumed that the vehicle will subsequently continue to move in the correct direction of travel.

Thereby, in a further embodiment of the method according to the invention, it can be provided that after acceleration of the vehicle to a predefined speed following the 180° direction change, it is assumed that the vehicle will continue to move in the prescribed direction of travel. If the speed after the turning maneuver is additionally used as an indicator, it can be ensured that an intentional direction change of 180° has been made. The predefined speed can be based, for example, on the speed limit of the section of road on which the vehicle is currently traveling. If the driver of the vehicle behaves in accordance with local regulations after the turning maneuver, it can be assumed that the wrong turn has been actively detected and terminated.

In addition, in a further embodiment of the method, it may be provided that the vehicle and/or the further vehicles communicate with the infrastructure by means of Car2X communication. Thus, the accuracy of the method can be increased. The infrastructure, albeit stationary, is also appropriately aligned with the roadway. If information about the orientation of individual elements of the infrastructure is known, conclusions can be drawn about whether the vehicle is passing these elements of the infrastructure in the correct direction.

In order to inform other road users that a wrong-way trip has ended, a further embodiment of the method according to the invention provides that other road users, in particular the other vehicles, are actively informed by means of Car2X communication that the vehicle is no longer moving against the statutory direction of travel. The Car2X communication enables other road users to be informed immediately when it is detected that the vehicle is no longer moving against the statutory direction of travel, so that the time delay from detection of the correct driving style to the information is minimal.

In order to reach as many road users as possible, it is additionally provided in a further embodiment of the invention that the notification is communicated by means of a DENM message. The Decentralized Environmental Notification Message (DENM) is a message about location and traffic data as well as traffic situations and danger spots. With Car2X communication, this information can be exchanged between road users. By using the 3GPP standard in which the Decentralized Environmental Notification Message system is defined, the message can be transmitted to as many compatible road users and/or infrastructure as possible.

Furthermore, in another embodiment of the method, it is envisaged that the message to the other vehicles contains information about the current position of the vehicle. Since the vehicle has moved in the wrong direction, it is important for the other road users to know whether an imminent danger still exists or has dissipated. By transmitting position information, it is possible to detect where the vehicle is at an early stage.

In order to increase the radius of the transmitted message, in a further advantageous embodiment of the method according to the invention, it is provided that the further vehicles forward the message of the vehicle by means of Car2X communication to receivers that are configured to transmit and receive Car2X messages, meaning that these receivers comprise at least one transceiver configured to send and receive messages (signals) via a wireless communication and at least one control unit that is configured to control the transceiver to send and receive messages (signals) via the wireless communication that are configured and designed to transmit and receive Car2X messages. Particularly preferred, the vehicle and/or the receivers are configured to perform Car2X communication via WLAN (WLANp), as for example defined in the IEEE 802.11 (or ITS-G5), and/or via a mobile communication network, as for example defined by the 3GPP mobile communication standards.

In this way, not only is the radius of the transmitted message increased, but other road users are also warned and informed at an early stage. The larger the radius of the disseminated message, the sooner road users, i.e. road users who are further away from the vehicle, know that the wrong-way trip on their route has ended.

The aforementioned task is also solved by a vehicle with at least one communication device for communication with other vehicles by means of Car2X communication and with at least one navigation device. It is envisaged that the vehicle is arranged to perform a aforementioned method. The previous explanations concerning the method according to the invention apply accordingly to the vehicle according to the invention.

The various embodiments of the invention mentioned in this application can be advantageously combined with each other, unless otherwise specified in the individual case.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of the various embodiments, those skilled in the art will recognize that the embodiments herein can be practiced with modification within the spirit and scope of the appended claims.

Although the embodiments herein are described with various specific embodiments, it will be obvious for a person skilled in the art to practice the invention with modifications. However, all such modifications are deemed to be within the scope of the claims.

It is also to be understood that the following claims are intended to cover all of the generic and specific features of the embodiments described herein and all the statements of the scope of the embodiments which as a matter of language might be said to fall therebetween.

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention."

The terminology used herein is for the purpose of describing particular embodiments only and is not intended to be limiting of the present invention. As used herein, the singular forms "a," "an," and "the" are intended to include the plural forms as well, unless the context clearly indicates otherwise. It will be further understood that the terms "comprises," "comprising," "includes," and "including," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

A processing device configured to implement a software component to perform an operation A may include a processor programmed to run software or execute instructions to control the processor to perform operation A. In addition, a processing device configured to implement a software component to perform an operation A, an operation B, and an operation C may have various configurations, such as, for example, a processor configured to implement a software component to perform operations A, B, and C; a first processor configured to implement a software component to perform operation A, and a second processor configured to implement a software component to perform operations B and C; a first processor configured to implement a software component to perform operations A and B, and a second processor configured to implement a software component to perform operation C; a first processor configured to implement a software component to perform operation A, a second processor configured to implement a software component to perform operation B, and a third processor configured to implement a software component to perform operation C; a first processor configured to implement a software component to perform operations A, B, and C, and a second processor configured to implement a software component to perform operations A, B, and C, or any other configuration of one or more processors each implementing one or more of operations A, B, and C. Although these examples refer to three operations A, B, C, the number of operations that may implemented is not limited to three, but may be any number of operations required to achieve a desired result or perform a desired task.

Software or instructions for controlling a processing device to implement a software component may include a computer program, a piece of code, an instruction, or some combination thereof, for independently or collectively instructing or configuring the processing device to perform one or more desired operations. The software or instructions may include machine code that may be directly executed by the processing device, such as machine code produced by a compiler, and/or higher-level code that may be executed by the processing device using an interpreter. The software or instructions and any associated data, data files, and data structures may be embodied permanently or temporarily in any type of machine, component, physical or virtual equipment, computer storage medium or device, or a propagated signal wave capable of providing instructions or data to or being interpreted by the processing device. The software or instructions and any associated data, data files, and data structures also may be distributed over network-coupled computer systems so that the software or instructions and any associated data, data files, and data structures are stored and executed in a distributed fashion.

The invention is explained below in embodiment examples with reference to the associated drawings. They show:
- Figure 1: a schematic representation of the implementation of an embodiment example of a method according to the invention,
- Figure 2: a schematic representation of the implementation of a further example of the process according to the invention, and
- Figure 3: a schematic block representation of the implementation of individual steps of an embodiment example of a method according to the invention.

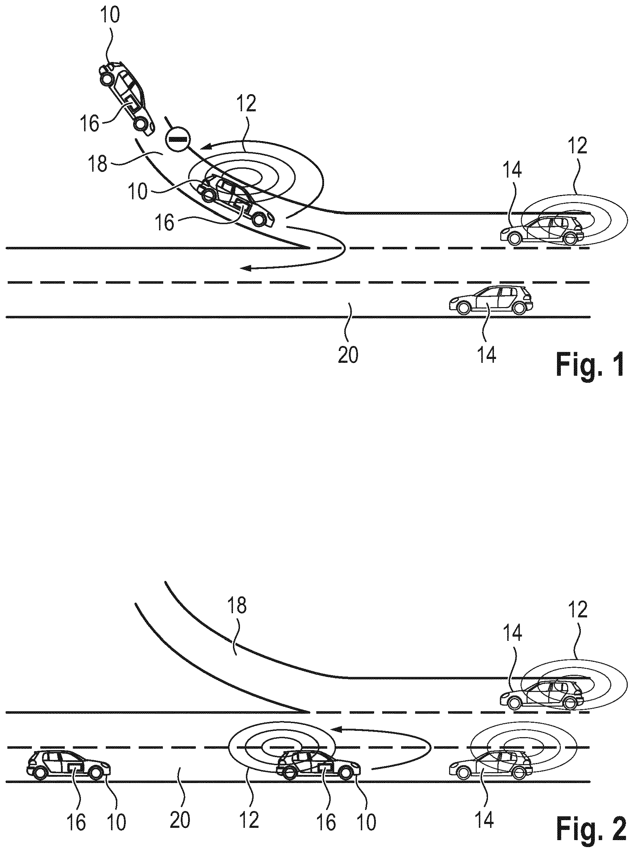

Figure 1 shows the correction of the direction of travel of a vehicle 10. By means of various indicators, it can be detected that the vehicle 10 is moving against the statutory direction of travel. The vehicle 10 can then use Car2X communication 12 to transmit the detection of the wrong direction to other vehicles 14. If the vehicle 10 then adjusts its direction of travel to the statutory direction of travel, this is signaled to other road users.

In the present embodiment, several indicators can be used to indicate that the vehicle 10 is again moving in the statutory direction of travel after a wrong-way trip. The vehicle 10 has a navigation device 16 that can obtain information about the direction of roads on a route based on satellite data. An indicator for detecting wrong-way driving is that it is detected by the navigation device 16 when the vehicle 10 enters an on-ramp 18 of a highway 20 in the wrong direction. Accordingly, a message is transmitted to the other vehicles 14 by means of Car2X communication 12.

If the driver takes note of the wrong-way driving when entering the highway 20, he can react and first slow down the vehicle 10 before initiating a turning maneuver in which he changes the driving direction of the vehicle by about 180°. If such behavior is registered, it can be assumed that the vehicle 10 will subsequently move in the statutory direction of travel.

If the vehicle 10 is already immediately ahead of the highway 20, a further indicator may be that the other vehicles 14 are transmitting information about their own direction of travel to the vehicle 10 by means of Car2X communication. If the transmitted information regarding the direction of travel of the further vehicles 14 is opposite to the direction of travel of the vehicle 10, the driver may react and adjust his direction of travel relative to the direction of travel of the further vehicles 14. If such behavior is registered, it is assumed that the vehicle 10 continues to move in the statutory direction of travel again. Via Car2X communication, it is then communicated to the other vehicles 14 that the wrong direction of travel has ended.

Figure 2 shows an embodiment of the method according to the invention, which is applied when the vehicle 10 is already moving on a highway. It is conceivable that the driver of the vehicle 10 notices a wrong-way trip and turns the vehicle 10 on the highway 20. To do this, the driver of the vehicle 10 must first slow down the vehicle 10 and then perform a 180° change of direction. If such behavior is registered, for example by the navigation device 16 or by corresponding sensors on the vehicle 10, this is an indicator that the vehicle 10 is subsequently moving in the prescribed direction on the highway 20. Also in this embodiment example, messages are sent by means of Car2X communication 12 to alert other road users, in particular the other vehicles 14.

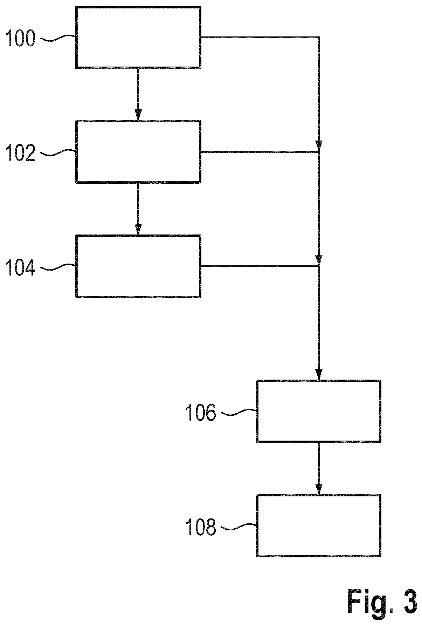

Figure 3 shows individual steps that are carried out in an exemplary embodiment. In the respective steps, it is checked whether there is an indicator for the end of a wrong-way trip. In step 100, information about the direction of travel of the respective further vehicles 14 communicating with the vehicle 10 is transmitted to the vehicle 10. In this process, it is checked whether a predetermined number of driving direction information is reached from further vehicles 14 which have an opposite relative driving direction compared to the vehicle 10. If this is not the case, it is assumed that the vehicle is moving in the statutory direction of travel.

In step 102, the vehicle 10 is assumed to be traveling in a direction opposite to the statutory direction of travel if it is detected by the navigation device 16 that the vehicle 10 is entering an on-ramp 18 of a state highway or an interstate highway 20 in the wrong on-ramp direction. Furthermore, it is assumed that the vehicle 10 is again moving in the statutory direction of travel when a deceleration of the vehicle 10 and a subsequent change in direction of the vehicle 10 by 180° is registered by the navigation device 16. If the vehicle 10 is in the wrong direction of travel on a highway exit, it is possible that the driver of the vehicle 10 will turn the vehicle 10 around and continue traveling in the opposite direction because he has realized his mistake. When making a turning maneuver on an exit ramp, it is reasonable to assume that the driver will initially slow the vehicle 10 to be able to initiate a 180° turning maneuver. If this occurs, it can be assumed that the vehicle 10 will subsequently continue to move in the correct direction of travel.

Furthermore, it is checked whether an acceleration of the vehicle 10 to > 40 km/h is performed after the change of direction by 180°. If the speed after the turning maneuver is also used as an indicator, it can be ensured that an intentional change of direction by 180° has been made. A speed > 40 km/h is based on the statutory speed limits in a highway exit. If the driver of vehicle 10 behaves according to the local regulations after the turning maneuver, it can be assumed that the wrong turn was actively detected and ended. Additionally, the vehicle 10 may be assumed to have no damage or defect if it proceeds approximately in accordance with the specified speed limits after the turning maneuver.

In step 104, it is assumed that the vehicle is no longer moving along the highway 20 in a direction opposite to the statutory direction of travel when the vehicle 10 initially slows down and a 180° change in direction is registered. If the vehicle 10 is already on a highway or a state highway and is traveling in the wrong direction, it is possible that the driver of the vehicle 10 will turn the vehicle 10 around and continue traveling in the opposite direction. Given an appropriate guideline speed on a state highway or freeway, it can be assumed that the driver will initially slow down the vehicle 10 in order to be able to initiate a 180° turning maneuver. If this occurs, it can be assumed that the vehicle 10 will subsequently continue to move in the correct direction of travel.

In addition, it is checked whether the vehicle 10 accelerates to a predefined speed after the 180° direction change. If the speed after the turning maneuver is also used as an indicator, it can be ensured that a deliberate change of direction by 180° has been made. The predefined speed can be based, for example, on the speed limit of the section of road on which the vehicle 10 is currently traveling. If the driver of the vehicle 10 behaves in accordance with the local regulations after the turning maneuver, it can be assumed that the wrong turn has been actively detected and terminated.

If wrong-way driving is detected in any of steps 100 to 104, messages are sent out to other road users using Car2X communication. If any of these steps imply as an indicator that wrong-way driving of the vehicle 10 has ended, an all-clear message is sent out to other vehicles 14 using Car2X communication 12 in step 106. By means of the Car2X communication, further road users can be informed immediately upon detection of the termination of a wrong-way trip, so that the time delay from detection of the termination of the wrong-way trip to the all-clear signal is minimal. The Car2X message is sent out as a DENM message, so that a message according to a known standard can be transmitted to as many further vehicles 14 compatible with this standard as possible.

The message to the further vehicles 14 contains information about the current position of the vehicle 10. In this way, other road users simultaneously receive information about where the wrong-way driver was until the situation has normalized and there is no longer any danger.

In step 108, the other vehicles 14 forward the message from the vehicle 10 to compatible receivers using Car2X communication 12. In this way, not only is the radius of the transmitted message increased, but other road users are also warned at an early stage. The larger the radius of the disseminated message, the sooner road users further away from the vehicle 10 will know that the wrong-way trip of a vehicle 10 has ended.

### List of reference signs

- 10: Vehicle
- 12: Car2X communication
- 14: Further vehicle
- 16: Navigation device
- 18: Ramp
- 20: Highway

## Claims

1. Method for detecting the driving of a vehicle (10) against the statutory direction of travel, wherein the vehicle (10) communicates with further vehicles (14) by means of Car2X communication (12), wherein other road users, in particular the further vehicles (14), are informed by means of Car2X communication (12) when the vehicle (10) moves against the statutory direction of travel, **characterized in, that** other road users, in particular the other vehicles (14), are signaled when the vehicle (10) is no longer moving in the opposite direction to the prescribed direction of travel.

2. Method according to claim 1, **characterized in that** signaling is realized by the absence of the message that the vehicle (10) is moving against the statutory direction of travel.

3. Method according to claim 1 or 2, **characterized in that** information about the direction of travel of the respective further vehicles (14) is transmitted at least to the vehicle (10) by further vehicles (14) communicating with the vehicle (10), **in that**, when a predetermined number of direction of travel information from further vehicles (14) having the same relative direction of travel compared to the vehicle (10) is reached, it is assumed that the vehicle (10) is moving in the statutory direction of travel.

4. Method according to claim 3, **characterized in that** when the direction of travel information from three further vehicles (14), preferably from five further vehicles (14), which have the same relative direction of travel compared to the vehicle (10) is reached, it is assumed that the vehicle (10) is moving in the statutory direction of travel.

5. Method according to any one of claims 1 to 4, **characterized in that** the vehicle (10) comprises a navigation device (16), wherein it is assumed that the vehicle (10) is moving in the opposite direction to the statutory direction of travel when detected by the navigation device (16), that the vehicle (10) is driving up an on-ramp (18) of a federal road or a highway (20) in the wrong direction of approach, and that it is assumed that the vehicle (10) is again moving in the statutory direction of travel when the navigation device (16) registers a deceleration of the vehicle and a subsequent change of direction of the vehicle (10) by 180°.

6. Method according to claim 5, **characterized in that** after an acceleration of the vehicle to > 40 km/h after the change of direction by 180°, it is assumed that the vehicle is moving in the statutory direction of travel.

7. Method according to one of claims 1 to 6, **characterized in that** it is assumed that the vehicle (10) no longer travels on the highway (20) against the statutory direction of travel when the vehicle (10) initially slows down and a change of direction by 180° is registered.

8. Method according to claim 7, **characterized in that** after acceleration of the vehicle to a predefined speed after the change of direction by 180°, it is assumed that the vehicle (10) is moving in the statutory direction of travel.

9. Method according to one of claims 1 to 8, **characterized in that** the vehicle (10) and/or the further vehicles (14) communicate with the infrastructure by means of Car2X communication (14).

10. Method according to one of claims 1 to 9, **characterized in that** other road users, in particular the further vehicles (14), are actively informed by means of Car2X communication (12) that the vehicle (10) is no longer moving against the statutory direction of travel.

11. Method according to claim 10, **characterized in that** the notification is communicated by means of DENM message.

12. Method according to claim 10 or 11, **characterized in that** the communication to the further vehicles (14) contains information about the current position of the vehicle (10).

13. Method according to any of claims 10 to 12, **characterized in that** the further vehicles (14) forward the communication of the vehicle by means of Car2X communication (12) to receivers that are configured to transmit and receive Car2X messages.

14. Vehicle (10), having at least one communication device for communicating with further vehicles (14) by means of Car2X communication (12) and having at least one navigation device (16), **characterized in that** the vehicle (10) is set up to carry out a method according to one of claims 1 to 13.

## Amended claims

### Amended claims in accordance with Rule 137(2) EPC.

1. Method for detecting the driving of a vehicle (10) against the statutory direction of travel, wherein the vehicle (10) communicates with further vehicles (14) by the means of Car2X communication (12), wherein other road users are informed by the means of Car2X communication (12) when the vehicle (10) moves against the statutory direction of travel, **characterized in, that** other road users, in particular the other vehicles (14), are signaled when the vehicle (10) is no longer moving in the opposite direction to the statutory direction of travel, and that the vehicle (10) comprises a navigation device (16), wherein it is assumed that the vehicle (10) is moving in the opposite direction to the statutory direction of travel when it is detected by the navigation device (16), that the vehicle (10) is driving up an on-ramp (18) of a federal road or a highway (20) in the wrong direction of approach, and wherein it is assumed that the vehicle (10) is again moving in the statutory direction of travel when the navigation device (16) registers a deceleration of the vehicle and a subsequent change of direction of the vehicle (10) by 180°.

2. Method according to claim 1, **characterized in that** information about a direction of travel of the respective further vehicles (14) is transmitted at least to the vehicle (10) by further vehicles (14) communicating with the vehicle (10), **in that**, when a predetermined number of direction of travel information from the further vehicles (14) having the same relative direction of travel compared to the vehicle (10) is reached, it is assumed that the vehicle (10) is moving in the statutory direction of travel.

3. Method according to claim 2, **characterized in that** when the direction of travel information from three further vehicles (14) which have the same relative direction of travel compared to the vehicle (10) is reached, it is assumed that the vehicle (10) is moving in the statutory direction of travel.

4. Method according to claim 1, **characterized in that** after an acceleration of the vehicle to > 40 km/h after the change of direction by 180°, it is assumed that the vehicle is moving in the statutory direction of travel.

5. Method according to one of claims 1 to 4, **characterized in that** it is assumed that the vehicle (10) no longer travels on the highway (20) against the statutory direction of travel when the vehicle (10) initially slows down and a change of direction by 180° is registered.

6. Method according to claim 5, **characterized in that** after acceleration of the vehicle to a predefined speed after the change of direction by 180°, it is assumed that the vehicle (10) is moving in the statutory direction of travel.

7. Method according to one of claims 1 to 6, **characterized in that** the vehicle (10) and/or the further vehicles (14) communicate with infrastructure, that is appropriately aligned with the roadway, by means of Car2X communication (14).

8. Method according to one of claims 1 to 7, **characterized in that** other road users are actively informed by means of Car2X communication (12) that the vehicle (10) is no longer moving against the statutory direction of travel.

9. Method according to claim 8, **characterized in that** a notification, that the vehicle (10) is no longer moving against the statutory direction of travel, is communicated by means of DENM message.

10. Method according to claim 8 or 9, **characterized in that** the communication to the further vehicles (14) contains information about the current position of the vehicle (10).

11. Method according to any of claims 8 to 10, **characterized in that** the further vehicles (14) forward the communication of the vehicle by means of Car2X communication (12) to receivers that are configured to transmit and receive Car2X messages.

12. Vehicle (10), having at least one communication device for communicating with further vehicles (14) by means of Car2X communication (12) and having at least one navigation device (16), **characterized in that** the vehicle (10) is set up to carry out a method according to one of claims 1 to 11.
